# EUROPEAN PATENT APPLICATION

(11) **EP 1 652 763 A1**
(43) Date of publication of application: **03.05.2006**
(21) Application number: 04766981.7
(22) Date of filing: 21.07.2004
(51) Int. Cl.: B62J 25/00, B62K 3/16, B62K 3/02, B62M 3/02

(54) **BICYCLE PROPULSION SYSTEM AND PRODUCT THUS OBTAINED**

(30) Priority: 22.07.2003 ES 200301715
(71) Applicant: Martinez Martinez, José, 46520 Puerto de Sagunto - Valencia (ES)
(72) Inventor: Martinez Martinez, José, 46520 Puerto de Sagunto - Valencia (ES)
(74) Representative: Urizar Anasagasti, Jesus Maria
(86) International application number: PCT/ES2004/070057
(87) International publication number: WO 2005/009830

(57) **Abstract**

This new bicycle propulsion system is based on propulsion of a bicycle (12) by means of a system consisting of a pedal (4) intended to receive the toes such that the force obtained by pedaling with this pedal (4) is transmitted to the drive wheel (8) as a result of the elongated crank (3), causing circular movement, increasing the diameter of the circumference made by the pedal (4) and sprocket wheel (6), wherein this sprocket wheel (6) communicates with the pinion (10) by means of the chain (11).

## Description

### Object of the Invention

The present invention relates to a bicycle propulsion system and the product thus obtained. With this propulsion system based on propulsion of the bicycle both with the quadriceps and femoral muscles and with the lower back muscles, greater pedaling power is obtained in addition to a much more complete and balanced exercise for the body because since the pedals are further back and higher up, it allows the elongated cranks to carry out the desired movement.

### Background of the Invention

The most similar machine is currently the conventional bicycle which, by means of a rotational movement of the pedals actuated by the legs, manages to move an axle and pinion mechanism and this moves the bicycle wheels, obtaining rectilinear movement. The main drawback involved with this system is that the only limb or muscular area that is worked are the quadriceps in the legs in the extension direction since one leg normally pulls the other leg, which means considerable disproportion in the physical exercise of this muscular area regarding the rest of the body. And as previously mentioned, not all the leg muscles are developed given that hardly any effort is made during bending in the upward movement.

At the same time, due to the fact that the muscle essentially responsible for all the effort is the quadriceps, pedaling power is much less because work is done only in the downward leg movement, so the upward leg movement is not taken advantage of to increase the power of the assembly.

On the other hand, conventional bicycle design does not allow for the development of other muscular areas such as abdominal and back muscles, or stretching of the spinal cord.

### Description of the Invention

- With the new bicycle propulsion system and the product thus obtained, object of the present invention, the intention is to prevent or palliate all the mentioned drawbacks; to that end, bicycle propulsion is obtained not only as a result of the quadriceps but also as a result of the femoral muscles and lower back muscles.
- To that end, the user is situated such that propulsion is carried out not only with the toes, but also with the knee and lower back muscles.
- The crank joining the sprocket wheel and the pedal has been elongated considerably with respect to known cranks in conventional bicycles so as to facilitate the exercise provided always by means of a circular movement.
- The bicycle frame has been considerably elongated to be able to house the pedals further back and higher up, which allows proper working of the elongated cranks.

### Description of the Drawings

To complement the description being made and for the purpose of aiding to better understand the features of the invention, a figure is attached to the present specification as an integral part thereof in which the following is shown with an illustrative and non-limiting nature:

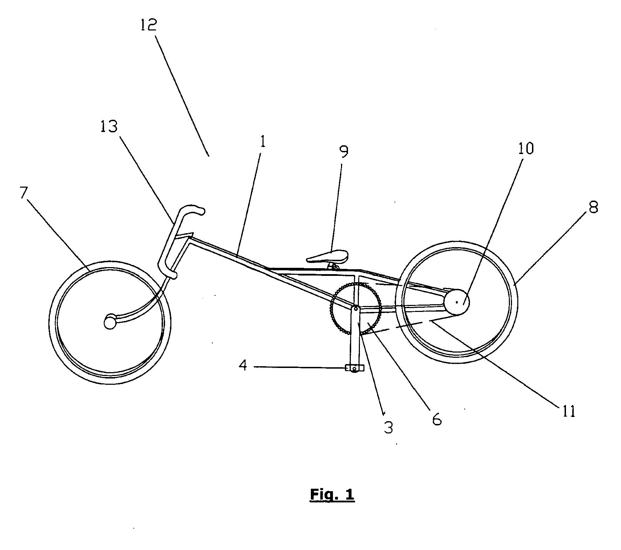

Figure 1 shows a side view of the bicycle with the new propulsion system.

### Preferred Embodiment of the Invention

As can be seen in the attached figure, first a crank (3) attached to a sprocket wheel (6) can be seen. Attached to this crank (3) is the pedal (4), which is prepared to firmly hold the toes and thus facilitate pedaling.

This bicycle allows exercising lower back muscles, therefore considerably increasing pedaling power with respect to conventional bicycles, transmitting this pedaling force to the drive wheel (8) by means of the pinion (10), which communicates with the sprocket wheel (6) by means of the chain (11).

Attachment of the pedal (4) and crank (3) is carried out by means of an attachment system that is able to withstand momentum and torsion introduced by the movement of the propulsion system.

Having sufficiently described the nature of the present invention as well as a manner of carrying it out to practice, it must be stated that it is possible to introduce changes of shape, materials and arrangement in the bicycle assembly and the parts forming it provided that said changes do not substantially alter the features of the invention claimed below.

## Claims

1. A bicycle propulsion system and product thus obtained, of the type used to propel a bicycle or any bicycle derivative propelled by the force of the leg muscles, **characterized in that** elongated cranks (3) attached to a sprocket wheel (6) incorporate a pedal (4) which receives the user's toes such that when pedaling, greater pedaling force is transmitted to the drive wheel (8) by means of the pinion (10), which communicates with the sprocket wheel (6) by means of the chain (11).

2. A bicycle propulsion system and product thus obtained according to claim one, **characterized in that** the frame (1) of the bicycle (12) has been elongated considerably.

3. A bicycle propulsion system and product thus obtained according to claim one, **characterized by** having the pedals arranged further back and higher up so as to allow the elongated cranks to carry out the desired movement.
